# EUROPEAN PATENT SPECIFICATION

(11) **EP 4 451 734 B1**
(45) Date of publication and mention of the grant of the patent: **25.02.2026**
(21) Application number: 22913867.2
(22) Date of filing: 16.11.2022
(51) Int. Cl.: H04W 28/06, H04W 4/50, H04W 88/18

(54) **SERVICE DISCOVERY PROCESSING METHOD, DEVICE, AND STORAGE MEDIUM**
DIENSTENTDECKUNGSVERARBEITUNGSVERFAHREN, VORRICHTUNG UND SPEICHERMEDIUM
PROCÉDÉ DE TRAITEMENT DE DÉCOUVERTE DE SERVICE, DISPOSITIF ET SUPPORT DE STOCKAGE

(30) Priority: 28.12.2021 CN 202111630147
(43) Date of publication of application: 23.10.2024
(73) Proprietor: ZTE Corporation, Shenzhen, Guangdong 518057 (CN)
(72) Inventor: ZHU, Guangliang, Shenzhen, Guangdong 518057 (CN)
(74) Representative: Casalonga
(86) International application number: PCT/CN2022/132314
(87) International publication number: WO 2023/124609

(56) References cited:
- WO-A1-2020/141355
- WO-A1-2021/027177
- CN-A- 112 566 072
- CN-A- 113 162 996
- KR-B1- 102 233 894
- US-A1- 2020 296 571
- US-A1- 2021 204 200
- US-A1- 2021 250 411
- CHINA MOBILE: "23.502 on NF service discovery procedures by NRF", SA WG2 MEETING #122BIS S2-175508, 21 August 2017 (2017-08-21), XP051325360

## Description

### CROSS-REFERENCE TO RELATED APPLICATION(S)

The present disclosure claims a priority to Chinese Patent Application No. 202111630147.5 filed with the Chinese Patent Office on December 28, 2021.

### TECHNICAL FIELD

The present disclosure relates to the field of communications, and in particular, to a service discovery processing method for a network function, a device and a storage medium.

### BACKGROUND

In the 5G core network, a network element implements the decoupling of software and hardware. A Network node in the 5G core network is called a network function (NF). Each of various NFs that make up the core network is decoupled and split at a functional level. Several self-contained, self-managed, and reusable network function services (NF Services, NFS) are split from the NF. These NFS can be independent of each other, and run independently. Service standardized interfaces provided by the NFS facilitate communication with other network function services.

The NFS in the 5G core network uses approaches of service registry and service discovery to provide a service. When each NF is pushed live to provide a service the NF may be registered on the network repository function (NRF), and registration information of NF is stored in the NRF. When a consumer NF needs to connect to a provider NF, the consumer NF may send a service discovery request to the NRF. The NRF may determine a target provider NF and then send registration information of the target provider NF to the consumer NF.

However, a service discovery success rate of a related service discovery is relatively low when the NRF is busy.

WO2020/141355A1 provides a method for optimizing NF service discovery. The method comprises: sending, to an authorization server, a combined service discovery and authorization request for an NF service; and receiving, from the authorization server, a service discovery response and an authorization response for the NF service.

### SUMMARY

In a first aspect, the present disclosure provides a service discovery processing method for a network function which is defined by claim 1.

In a second aspect, the present disclosure provides a network device which is defined by claim 10.

In a third aspect, the present disclosure further provides a storage medium for computer-readable storage which is defined by claim 11.

Further advantageous embodiments of the present disclosure are indicated in the dependent claims.

### BRIEF DESCRIPTION OF THE DRAWINGS

FIG. 1 is a schematic architecture diagram of the 5G core network system provided by the embodiments of the present disclosure.
FIG. 2 is a schematic architecture diagram of a service discovery system for a network function provided by the embodiments of the present disclosure.
FIG. 3 is a flowchart of steps of a service discovery processing method for a network function provided by the embodiments of the present disclosure.
FIG. 4 is another flowchart of steps of the service discovery processing method for a network function provided by the embodiments of the present disclosure.
FIG. 5 is another flowchart of steps of the service discovery processing method for a network function provided by the embodiments of the present disclosure.
FIG. 6 is another flowchart of steps of the service discovery processing method for a network function provided by the embodiments of the present disclosure.
FIG. 7 is another flowchart of steps of the service discovery processing method for a network function provided by the embodiments of the present disclosure.
FIG. 8 is a schematic structural diagram of a network device provided by the embodiments of the present disclosure.

### DETAILED DESCRIPTION

The technical solutions in the embodiments of the present disclosure will be described clearly and completely with reference to the accompanying drawings in the embodiments of the present disclosure. Obviously, the described embodiments are merely some but not all of embodiments of the present disclosure. All other embodiments obtained based on the embodiments of the present disclosure by a person of ordinary skill in the art without paying any creative effort shall be included in the protection scope of the present disclosure.

The flowcharts shown in the accompanying drawings are only examples and do not necessarily include all contents and operations/steps, nor are they necessarily performed in the described order. For example, some operations/steps can also be decomposed, combined or partially merged, thus the actual executing order may change according to an actual situation.

It should be understood that the terminology used in the description of the present disclosure is for the purpose of describing particular embodiments only and is not intended to limit the present disclosure. As used in the present disclosure and the appended claims, the terms "a," "an," and "the" conveying a singular usage are also intended to convey a plural usage unless the context clearly dictates otherwise.

A service discovery processing method for a network function, a device, and a storage medium are provided in the embodiments of the present disclosure. The service discovery processing method for a network function can be applied to a network device, and the network device can be a general server.

Some implementations of the present disclosure will be described below in detail with reference to the accompanying drawings. The following embodiments and features in the embodiments may be arbitrarily combined with each other without conflict.

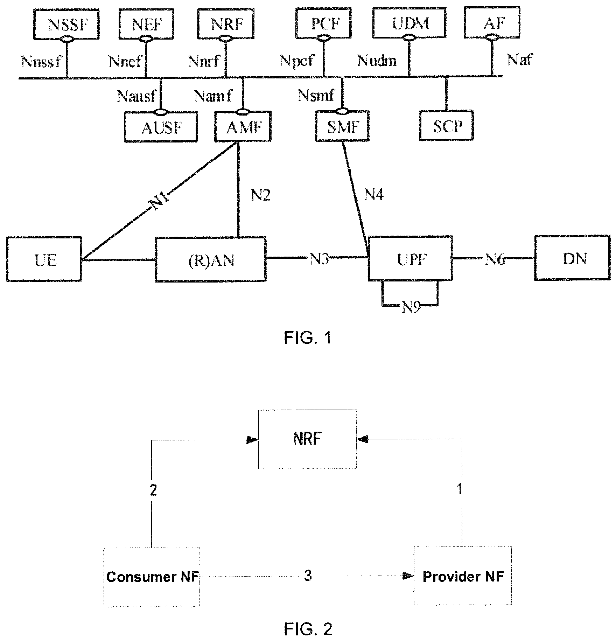

Referring to FIG. 1, FIG. 1 is a schematic architecture diagram of the 5G communication system (also referred to as 5G core network system) provided by the embodiments of the present disclosure.

The 5G core network adopts a separated architecture, and traditional network elements are split into multiple network functions (NF). Each NF is independent and autonomous, and the addition, upgrade, and modification of each NF may not hinder other NFs.

As shown in FIG. 1, the 5G core network system includes the following network functions:
a network slice selection function (NSSF), configured to select to determining an allowed NSSAI for a network slice instance set for serving the UE, and determine a mapping to a subscribed S-NSSAI when necessary; determine a configured NSSAI and determine the mapping to the subscribed S-NSSAI when necessary; determine a set of authentication management function (AMF) that may be used to query the UE, or determine a list of candidate AMFs based on configuration (possibly by querying the NRF);
a network exposure function (NEF) is configured to connect to all network functions (NF) based on a service-based architecture in a bus manner (as shown in the drawings below). Exposing network capabilities to third-party applications can realize a friendly docking between the network capabilities and the service requirements, improve the service experience, and optimize the network resource allocation;
a network repository function (NRF), configured to support a service discovery function, receive a NF discovery request from a NF instance, and provide information about a discovered NF instance (which is discovered) to the NF instance; and maintain an available NF instance and NF profiles of services supported by the available NF instance;
a policy control function (PCF), configured to provide all mobility, UE access selection and policies related to a protocol data unit (PDU) session for which the PCF is responsible;
a unified data management (UDM), configured to be responsible for the unified processing of front-end data, which includes a user identification, a user subscription data, authentication data, etc.;
an application function (AF), configured to be responsible for an interaction with the 3GPP core network to provide services;
an authentication server function (AUSF), e.g., a network function (NF) authentication server function (AUSF), which is a network entity in the 5G core network (5GC), and supports the following functions: authenticating the UE for a requester NF; providing a key material to the requester NF; protecting a "guidance information list" of the requester NF;
an access and mobility management function (AMF), configured to be equivalent to adding non-access stratum (NAS) transparent transmission function to a mobility management function of 4G mobility management entity (4GMME), and including registration management, connection management, reachability management, mobility management, access authentication, access authorization; legally monitoring; forwarding short messages (SM) between UE and SMF; and forwarding short message service (SMS) messages between UE and short message service function (SMSF);
a session management function (SMF), configured to be responsible for processing services of the user, where the SMF can be regarded as a combination of a bearer management of the MME, and a control plane function of serving gateway (SGW) and packet data network gateway (PGW), and is equivalent to the 4G MME session management function and SGW-C/PGW-C session management: UE IP address allocation and management, selection and control of user plane function (UPF), configuration of UPF traffic and orientation, forwarding to appropriate destination network; legally monitoring; charging and Qos policy controlling; charging data collection;
a service communication proxy (SCP), configured to enable each NF and services of each NF to interact with other NFs and services of other NFs directly or indirectly through SCP when necessary. The introduction of SCP can further decouple the service logic and service framework in the service, so that the services in NF only focus on the service logic itself as much as possible, while common parts of each of the original services are separated independently and put into the SCP. In this way, when a new service is introduced, service logic of the new service is merely needed to be focused on, and a underlying service framework is handed over to CSP for completion, without re-implementing the underlying service framework, thus greatly facilitating the introduction of the new service;
a user plane function (UPF), configured to responsible for the routing and forwarding functions of a user plane fully;
a data network (DN), configured to responsible for operator services, Internet access or third-party services;
a (radio) access network ((R)AN);
a user equipment (UE).

Based on the schematic diagram of the architecture of the 5G core network system shown in FIG. 1, a schematic architecture diagram of a service discovery system for a network function is provided in the embodiments of the present disclosure.

Referring to FIG. 2, FIG. 2 is a schematic architecture diagram of a service discovery system for a network function provided by the embodiments of the present disclosure.

In step 1, a provider NF first completes a registration on a NRF, and registration information (NF profile) of the provider NF is stored in the NRF.

In step 2, when a consumer NF sends a service discovery request to the NRF, after calculation and matching is performed by the NRF, and when it is determined that services provided by a target provider NF can meet requirements of the consumer NF that sends the service discovery request, registration information of the target provider NF is acquired, and the registration information of the target provider NF or information that is acquired based on the registration information is provided to the consumer NF.

In step 3, when the consumer NF acquires the registration information of the target provider NF or the information that is acquired based on the registration information, the consumer NF determines the target provider NF according to an indication of the registration information or the information that is acquired based on the registration information, then establishes a connection with the target provider NF and accesses the target provider NF. The consumer NF may also store the registration information of the target provider NF and the information that is acquired based on the registration information locally. When the services provided by the target provider NF are needed next time, there is no need to initiate a service discovery service through the NRF, but the consumer NF directly determines the target provider NF based on the registration information, and then directly accesses the target provider NF.

Based on the schematic diagram of the architecture of the service discovery system for a network function shown in FIG. 2, a service discovery processing method for a network function is provided in the embodiments of the present disclosure.

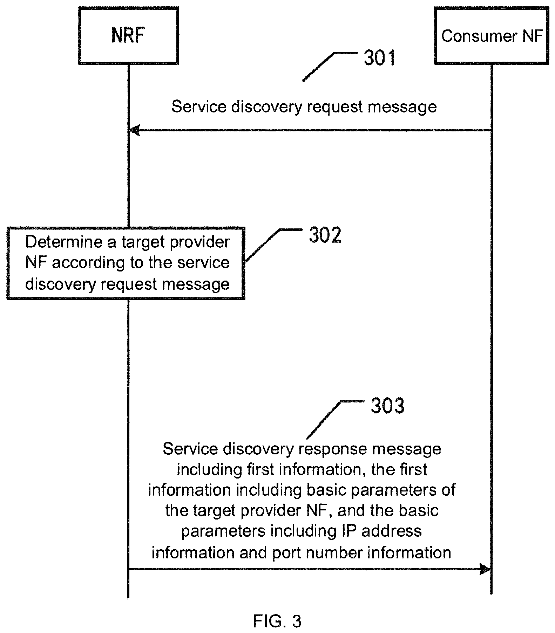

Referring to FIG. 3, FIG. 3 is a flowchart of steps of a service discovery processing method for NFs provided by the embodiments of the present disclosure.

In 301, NRF receives a service discovery request message sent from a consumer NF.

Registration information of a provider NF is stored in the NRF. The registration information of the provider NF represents a configuration parameter of the provider NF and a service configuration parameters of a service supported by the provider NF.

The consumer NF sends a service discovery request message to the NRF. The service discovery request message represents a requirement for service performance required by the consumer NF.

In 302, the NRF determines a target provider NF according to the service discovery request message.

When NRF receives the service discovery request message sent from the consumer NF, the NRF performs matching for provider NFs that have been registered on the NRF through the service discovery request message according to registration information of the provider NFs that have been registered, so as to determine the target provider NF that can meet the requirement for the service performance in the service discovery request message.

In 303, the NRF sends a service discovery response message to the consumer NF. The service discovery response message includes first information. The first information includes a basic parameter of the provider NF (e.g., the target provider NF). The first information is smaller than the registration information of the target provider NF. The basic parameter includes IP address information and port number information.

After the NRF determines the target provider NF that meets the requirement, the NRF sends first information obtained by tailoring the registration information of the target provider NF to the consumer NF. The first information obtained after the registration information of the target provider NF being tailored is smaller than the registered information. There are three forms of expression for a situation that the first information is smaller than the registration information of the target provider NF. The first form of expression is that fields of the first information are fewer than fields of the registration information. The second form of expression is that the fields of the first information are the same as the registration information, but values of the fields of the first information are fewer than values of fields of the registration information. The third form of expression is that the fields of the first information are fewer than the registration information and the values of the fields of the first information are also fewer than the registration information.

The first information at least includes a basic parameter of the target provider NF, and also includes some required parameters that cannot be tailored, which are defined in the standard. Information included in the basic parameter is shown in Table 1 below:

**Table 1**

| | |
|---|---|
| Basic parameter | IP address information |
| | Port number information |

The IP address information and port number information included in the basic parameter of the target provider NF are used to enable the consumer NF to connect to the target provider NF based on the IP address information and port number information and complete the service requirements for this time. The fields of the first information obtained after the registration information of the target provider NF being tailored are fewer than the fields of the registration information of the target provider NF, and the amount of data is relatively small.

Sending the first information obtained by tailoring the registration information to the consumer NF can be set as sending the first information obtained by tailoring the registration information of the target provider NF to the consumer NF fixedly by the NRF, can also be set as sending the first information obtained after the registration information of the target provider NF being tailored to the consumer NF when a preset condition is met, and sending the complete registration information of the target provider NF in the service discovery response message when the preset condition is not met.

It can be seen that by sending the first information obtained by tailoring the registration information to the consumer NF, the amount of data transmitted is reduced, more service processing volume can be achieved with the same bandwidth, and thus, network congestion is alleviated.

Based on the service discovery processing method provided in the embodiments shown in FIG. 3, another service discovery processing method is further provided in the embodiments of the present disclosure.

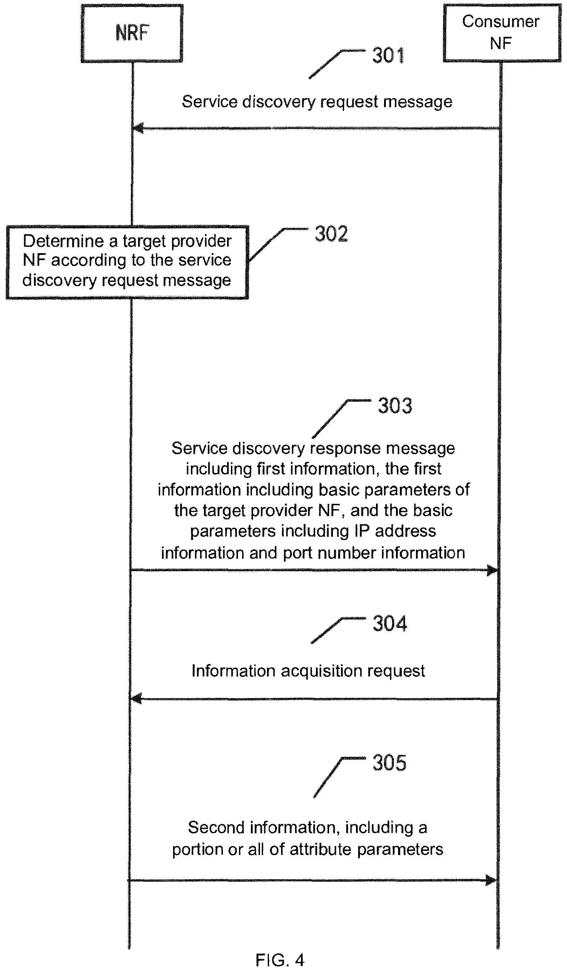

Referring to FIG. 4, FIG. 4 is another flowchart of steps of the service discovery processing method provided by the embodiments of the present disclosure. The flowchart of the steps further includes steps 304 and 305.

In 304, the consumer NF sends an information acquisition request to the NRF.

After the consumer NF receives the first information returned by the NRF in the service discovery response message, the consumer NF can receive the complete registration information and can further receive other information in the registration information. The received complete registration information is registration information provided the target provider NF that the NRF directly returns to the consumer NF; the received other information in the registration information can be directly returned to the consumer NF after being determined by the NRF, or can be other information in the registration information except the first information and acquired according to the information acquisition request to the NRF sent by the consumer NF.

In the embodiments of the present disclosure, the consumer NF sends the information acquisition request to the NRF, so as to acquire the other information in the registration information except the first information.

In 305, in response to the information acquisition request, the NRF sends second information to the consumer NF. The second information includes a portion or all of attribute parameters of the target provider NF.

When the NRF receives the information acquisition request sent from the consumer NF, the NRF may determine information that needs to be acquired indicated by the information acquisition request and send the second information to the consumer NF. The second information is not used for the consumer NF to establish a connection and communicate with the target provider NF for this time, but is used to be stored in the consumer NF and called by the consumer NF when a service needs. The second information includes a portion or all of the attribute parameters of the target provider NF.

Based on the service discovery processing method provided in the embodiments shown in FIG. 3 or FIG. 4, the first information is further provided in the embodiments of the present disclosure.

Information included in the first information, in addition to the basic parameters shown in Table 1 for establishing a connection between the consumer NF and the target provider NF and completing a communication, can further include a portion or all of reference parameters. The reference parameters are used to perform a secondary filtering on multiple target provider NFs, so as to acquire an optimal target provider NF. The information included in the reference parameters is shown in Table 2 below:

**Table 2**

| | |
|---|---|
| | Protocol type information |
| Reference parameters | Load information |
| | Capacity information |

Based on the service discovery processing method provided in the embodiments shown in FIG. 3 or FIG. 4, the second information is further provided in the embodiments of the present disclosure.

The second information includes a portion or all of the attribute parameters of the target provider NF. Information included in the attribute parameters of the target provider NF is shown in Table 3 below:

**Table 3**

| | |
|---|---|
| | TAI information |
| | SUPI information |
| Attribute parameters | GPSI information |
| | IPv4 information |
| | IPv6 information |

Further, in some embodiments, information included in the TAI (tracking area identity) information is shown in Table 4 below:

**Table 4**

| | |
|---|---|
| TAI information | TAI information served by AMF |
| | TAI information served by SMF |

Further, in some embodiments, information included in the SUPI information is shown in Table 5 below:

**Table 5**

| | |
|---|---|
| | SUPI information of served by UDM |
| SUPI information | SUPI information of served by UDR |
| | SUPI information of served by PCF |
| | SUPI information of served by AUSF |

Further, in some embodiments, information included in the GPSI information is shown in Table 6 below:

**Table 6**

| | |
|---|---|
| | GPSI information of served by UDM |
| GPSI information | GPSI information of served by UDR |
| | GPSI information of served by PCF |

Further, in some embodiments, the first information may not only include basic parameters or include the basic parameters and the reference parameters, but also may include a portion or all of the attribute parameters.

In combination with the above description, another service discovery processing method is further provided in the embodiments of the present disclosure.

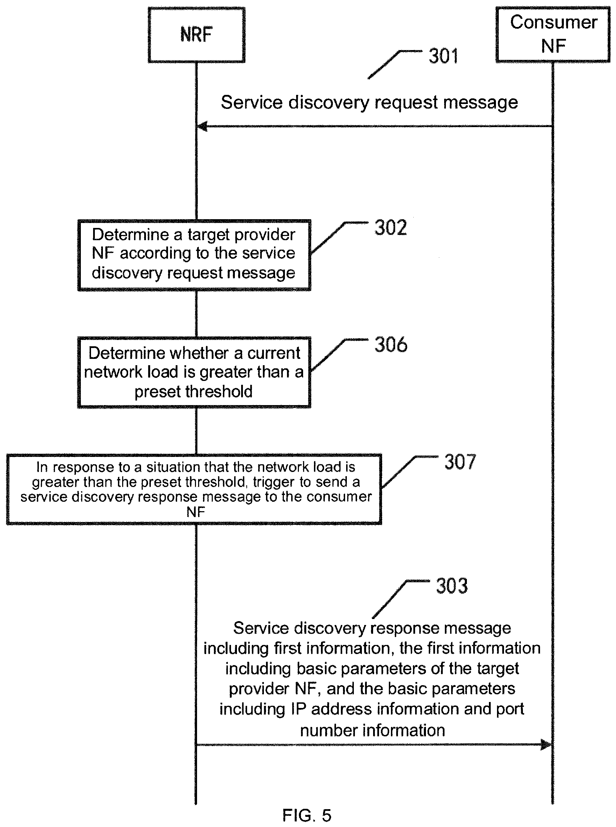

Referring to FIG. 5, FIG. 5 is another flowchart of steps of the service discovery processing method provided by the embodiments of the present disclosure.

The flowchart of steps also includes steps 306 and 307.

In 306, NRF determines whether a current network load is greater than a preset threshold.

After the NRF receives the service discovery request message sent from the consumer NF, the NRF can choose a policy for returning the service discovery response message based on a current condition. NRF can determine whether the current network load is greater than the preset threshold to determine the policy for returning the service discovery response message. NRF may acquire a condition of the current communication network load. The network load can be a load of NRF itself or a load of other network devices used for communication in other 5G core networks.

In 307, when the network load is greater than the preset threshold, the NRF is triggered to send the service discovery response message to the consumer NF, and the service discovery response message includes the first information.

When NRF determines that the current network load is greater than the preset threshold, NRF determines that the available bandwidth for information transmission in the current network is relatively small, and NRF may trigger a return for the first information obtained by tailoring the registration information in the service discovery response message, the fields of the first information being relatively smaller than the fields of the registration information.

In combination with the above description, another service discovery processing method is further provided in the embodiments of the present disclosure.

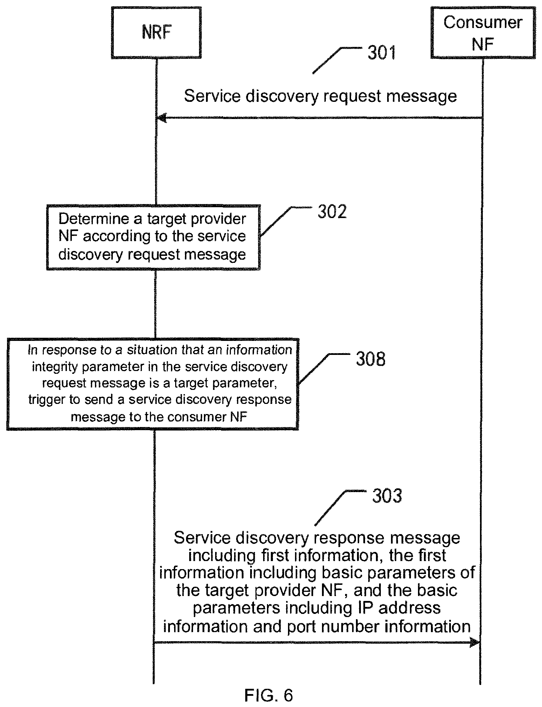

Referring to FIG. 6, FIG. 6 is another flowchart of steps of the service discovery processing method provided by the embodiments of the present disclosure.

The flowchart of steps further includes step 308.

In 308, when an information integrity parameter in the service discovery request message is a target parameter, the NRF is triggered to send the service discovery response message to the consumer NF, and the service discovery response message includes the first information.

Whether to return complete registration information in the service discovery response message can be determined by the NRF according to a condition. For example, in the embodiment shown in FIG. 5, the NRF can determine whether to return complete registration information in the service discovery response message according to the current network load. A request for acquiring the complete registration information or not can also be made by the consumer NF itself.

The service discovery request message sent from the consumer NF includes the information integrity parameter used to represent whether the integral registration information needs to be acquired. At the same time, setting the information integrity parameter as the target parameter indicates that the consumer NF does not need to acquire the integral registration information.

When NRF determines that the information integrity parameter in the service discovery request message is the target parameter, NRF may trigger a return for the first information obtained by tailoring the registration information in the service discovery response message (the fields of the first information being relatively smaller than the fields of the registration information), but may not return the integral registration information.

In combination with the above description, another service discovery processing method is provided in the present disclosure.

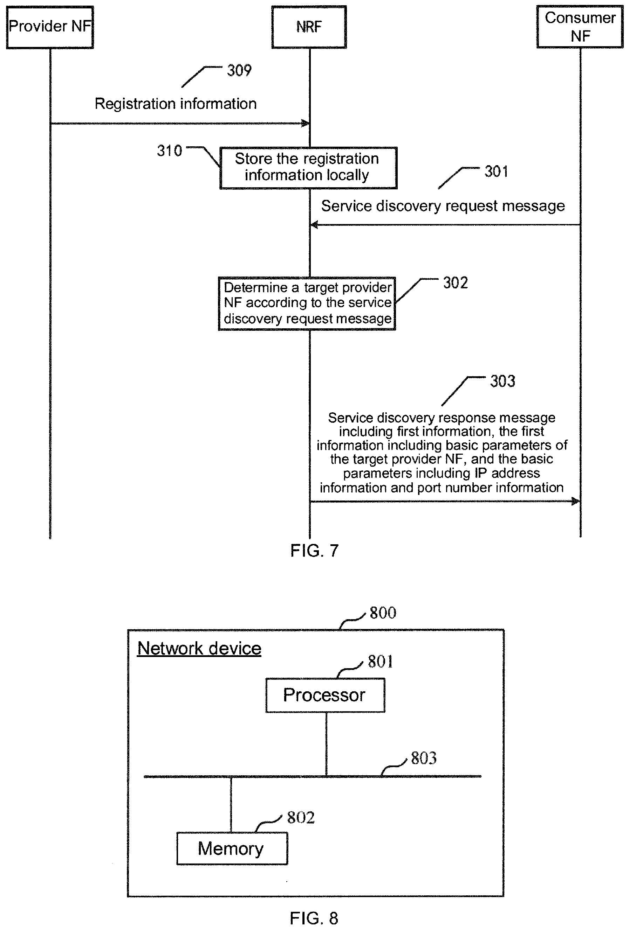

Referring to FIG. 7, FIG. 7 is another flowchart of steps of the service discovery processing method provided by the embodiments of the present disclosure.

The flowchart of steps also includes steps 309 and 310.

In 309, NRF receives the registration information of the target provider NF.

When the target provider NF needs to participate an acquisition service and a discovery service of the 5G core network, under the service discovery protocol mechanism of the current network function, the provider NF needs to send the registration information to the NF to finish a registration process. The registration information represents configuration parameters of the provider NF and service configuration parameters of services supported by the provider NF.

In 310, NRF stores the registration information locally.

When the NRF receives the registration information sent from the provider NF, the NRF registers the NF on the 5G core network and stores the registration information of the provider NF.

There are many ways for NRF to store the registration information. One way is to store the registration information directly. When the registration information needs to be tailored, the first information or the second information may be obtained based on the registration information. Another way is to divide the registration information into the first information and the second information, and store the first information and the second information locally respectively. When the first information or the second information needs to be returned, the first information or the second information may be called directly without the need to acquire the first information or the second information again based on the registration information.

Referring to FIG. 8, FIG. 8 is a schematic structural diagram of a network device provided by the embodiments of the present disclosure.

As shown in FIG. 8, the network device 800 includes a processor 801 and a memory 802. The processor 801 and the memory 802 are connected through a bus 803. The bus 803 is, for example, an I2C (Inter-integrated Circuit) bus.

The processor 801 is used to provide computing and control capabilities to support operations of the entire network device. The processor 801 may be a central processing unit (CPU). The processor 801 may also be another general-purpose processor, a digital signal processor (DSP), an application specific integrated circuit (ASIC), a field programmable gate array (FPGA) or another programmable logic device, a discrete gate or a transistor logic device, a discrete hardware component, etc. The general-purpose processor can be a microprocessor, or can be any conventional processor, etc.

The memory 802 can be a flash chip, a read-only memory (ROM) disk, an optical disk, a U disk or a mobile hard disk, etc.

Those skilled in the art can understand that the structure shown in FIG. 8 is only a block diagram of a portion of structure related to the embodiments of the present disclosure, and does not constitute a limitation on the network device to which the embodiments of the present disclosure are applied. The network device may include more or fewer components than what are shown in drawings, or certain components may be combined, or a different arrangement of components may be implemented.

The processor is used to run a computer program stored in the memory, and implement any one of service discovery processing method provided in the embodiments of the present disclosure when the computer program is executed.

In an embodiment, the processor is configured to run a computer program stored in the memory, and implement the following steps when the computer program is executed: receiving a service discovery request message from a consumer NF, the service discovery request message representing a service requirement of the consumer NF; determining a target provider NF according to the service discovery request message; sending a service discovery response message to the consumer NF, where the service discovery response message includes first information of the target provider NF, and the first information at least includes basic parameters of the target provider NF, the basic parameters include Internet protocol (IP) address information and port number information, and fields of the first information are fewer than fields of registration information.

In an embodiment, the processor is configured to run a computer program stored in the memory, and implement the following steps when the computer program is executed: receiving an information acquisition request sent by the consumer NF; in response to the information acquisition request, sending second information to the consumer NF, the second information including a portion or all of attribute parameters of the target provider NF.

The first information includes reference parameters, and the reference parameters include at least one of protocol type information, load information, and capacity information. The attribute parameters include at least one of tracking area identification (TAI) information, subscription permanent identity (SUPI) information, general public subscription identity (GPSI) information, and network protocol version information served by binding support function (BSF).

In an embodiment, the processor is configured to run a computer program stored in the memory, and implement the following steps when the computer program is executed: determining whether a current network load is greater than a preset threshold; in response to a situation that the network load is greater than the preset threshold, triggering to send the service discovery response message to the consumer NF, where the service discovery response message only includes the first information.

In an embodiment, the processor is configured to run a computer program stored in the memory, and implement the following steps when the computer program is executed: in response to a situation that an information integrity parameter in the service discovery request message is a target parameter, triggering to send the service discovery response message to the consumer NF, where the service discovery response message only includes the first information, and the information integrity parameter represents whether the consumer NF requires to acquire integral registration information.

In an embodiment, the processor is configured to run a computer program stored in the memory, and implement the following steps when the computer program is executed: receiving registration information of the target provider NF; and storing the registration information locally.

In an embodiment, the processor is configured to run a computer program stored in the memory, and implement the following steps when the computer program is executed: dividing registration information into the first information and the second information, and storing the first information and the second information locally.

It should be noted that those skilled in the art can clearly understand that for the convenience and simplicity of description, the working processes of the terminal devices described above may refer to the corresponding processes in the embodiments of a service discovery processing method mentioned above, and details may not be repeated herein.

A storage medium for computer-readable storage is further provided in the embodiments of the present disclosure. The storage medium stores one or more programs, and the one or more programs can be executed by one or more processors to implement any one of steps of the service discovery processing method provided in the embodiments of the present disclosure.

The storage medium may be an internal storage unit of the terminal device described in the previous embodiments, such as a hard disk or memory of the terminal device. The storage medium may also be an external storage device of the terminal device, such as a plug-in hard disk, a smart media card (SMC), a secure digital (SD) card, or a flash card, etc., equipped on the terminal device.

It should be understood by those skilled in the art that, all or a portion of functional modules/units in steps, system, or apparatus in the method disclosed above may be implemented as a software, a firmware, a hardware, and a suitable combination thereof. In hardware implementations, the division between functional modules/units mentioned in the above description does not necessarily correspond to the division of physical components. For example, one physical component may have multiple functions, or one function or step may be executed by several physical components cooperatively. A portion or all of the physical components may be implemented as a software executed by a processor, such as a central processor, a digital signal processor or a microprocessor, or may be implemented as a hardware, or implemented as an integrated circuit, such as an application specific integrated circuit. Such software may be distributed on a computer readable medium, which may include a computer storage medium (or a non-transitory medium) and a communication medium (or a transitory medium). As well known to those skilled in the art, the term "computer storage medium" includes volatile and non-volatile, removable and non-removable media implemented in any method or technology for storing information (e.g., computer readable instructions, data structures, program modules or other data). The computer storage medium includes, but is not limited to, RAM, ROM, EEPROM, flash or other memory technologies, CD-ROM, digital versatile disk (DVD) or other optical disk storages, magnetic cassettes, tapes, disk storages or other magnetic storage apparatus, or any other medium that can be used to store desired information and can be accessed by computers. In addition, it is well known to those skilled in the art that, a communication medium generally includes computer readable instructions, data structures, program modules or other data in a modulation data signal such as a carrier wave or other transmission mechanisms, and may include any information delivery medium.

The above serial numbers of the embodiments of the present disclosure are only for description and do not represent the advantages and disadvantages of the embodiments. The above description is only the implementation disclosed in the present disclosure, but does not intend to limit the protection scope of the present disclosure. Any one of those skilled in the art can easily considers about various equivalent modifications or replacements within the scope of disclosure, which should be covered within the protection scope of the present disclosure. Therefore, the protection scope of the present disclosure shall be determined by the protection scope of the claims.

## Claims

1. A service discovery processing method, comprising:
receiving a service discovery request message from a consumer network function, NF, the service discovery request message representing a service requirement of the consumer NF;
determining a target provider NF according to the service discovery request message; and
sending a service discovery response message to the consumer NF, wherein the service discovery response message comprises first information of the target provider NF, and the first information at least comprises basic parameters of the target provider NF, the basic parameters comprise Internet protocol, IP, address information and port number information, and the first information is smaller than registration information of the target provider NF, wherein the first information is obtained by tailoring the registration information of the target provider NF.

2. The service discovery processing method according to claim 1, wherein after the sending the service discovery response message to the consumer NF, the method further comprises:
receiving an information acquisition request sent by the consumer NF; and
in response to the information acquisition request, sending second information to the consumer NF, wherein the second information comprises a portion or all of attribute parameters of the target provider NF.

3. The service discovery processing method according to claim 1 or 2, wherein the first information includes reference parameters, and the reference parameters comprise at least one of protocol type information, load information, and capacity information.

4. The service discovery processing method according to claim 2, wherein the attribute parameters comprise at least one of tracking area identity, TAI, information, subscription permanent identity, SUPI, information, general public subscription identity, GPSI, information, and network protocol version information served by binding support function, BSF.

5. The service discovery processing method according to any one of claims 1 to 4, wherein before the sending the service discovery response message to the consumer NF, the method further comprises:
determining whether a current network load is greater than a preset threshold; and
in response to a situation that the current network load is greater than the preset threshold, triggering to send the service discovery response message to the consumer NF, wherein the service discovery response message only includes the first information.

6. The service discovery processing method according to any one of claims 1 to 4, wherein before the sending the service discovery response message to the consumer NF, the method further comprises:
in response to a situation that an information integrity parameter in the service discovery request message is a target parameter, triggering to send the service discovery response message to the consumer NF, wherein the service discovery response message only includes the first information, and the information integrity parameter represents whether the consumer NF requires to acquire integral registration information.

7. The service discovery processing method according to claim 1, wherein before the receiving the service discovery request message from the consumer NF, the method further comprises:
receiving the registration information of the target provider NF; and
storing the registration information locally.

8. The service discovery processing method according to claim 7, wherein the storing the registration information locally includes:
dividing the registration information into the first information and second information, and storing the first information and the second information locally.

9. The service discovery processing method according to claim 8, wherein the second information comprises a portion or all of attribute parameters of the target provider NF.

10. A network device, comprising:
one or more processors (801); and
a memory (802) with one or more programs stored thereon, wherein the one or more programs, upon being executed by the one or more processors, cause the one or more processors to implement the method according to any one of claims 1 to 9.

11. A storage medium with a computer program stored thereon, wherein the computer program, upon being executed by a processor, implements the method according to any one of claims 1 to 9.

## Patentansprüche

1. Dienstentdeckungsverarbeitungsverfahren, das Folgendes umfasst:
Empfangen einer Dienstentdeckungsanforderungsnachricht von einer Verbrauchernetzfunktion, NF, wobei die Dienstentdeckungsanforderungsnachricht eine Dienstanforderung der Verbraucher-NF darstellt;
Bestimmen einer Zielanbieter-NF gemäß der Dienstentdeckungsanforderungsnachricht; und
Senden einer Dienstentdeckungsantwortnachricht an die Verbraucher-NF, wobei die Dienstentdeckungsantwortnachricht erste Informationen der Zielanbieter-NF umfasst und die ersten Informationen mindestens Basisparameter der Zielanbieter-NF umfassen, die Basisparameter Internetprotokoll-, IP-, Adressinformationen und Portnummerninformationen umfassen und die ersten Informationen kleiner als Registrierungsinformationen der Zielanbieter-NF sind, wobei die ersten Informationen durch Anpassen der Registrierungsinformationen der Zielanbieter-NF erhalten werden.

2. Dienstentdeckungsverarbeitungsverfahren nach Anspruch 1, wobei das Verfahren nach dem Senden der Dienstentdeckungsantwortnachricht an die Verbraucher-NF ferner Folgendes umfasst:
Empfangen einer Informationserfassungsanforderung, die von der Verbraucher-NF gesendet wird; und
als Reaktion auf die Informationserfassungsanforderung, Senden von zweiten Informationen an die Verbraucher-NF, wobei die zweiten Informationen einen Teil oder alle Attributparameter der Zielanbieter-NF umfassen.

3. Dienstentdeckungsverarbeitungsverfahren nach Anspruch 1 oder 2, wobei die ersten Informationen Referenzparameter enthalten und die Referenzparameter mindestens eines von Protokolltypinformationen, Lastinformationen und Kapazitätsinformationen umfassen.

4. Dienstentdeckungsverarbeitungsverfahren nach Anspruch 2, wobei die Attributparameter mindestens eines von Verfolgungsbereichsidentitäts-, TAI-, Informationen, permanenten Abonnementidentitäts-, SUPI-, Informationen, allgemeinen öffentlichen Abonnementidentitäts-, GPSI-, Informationen und Netzprotokollversionsinformationen, die durch eine Bindungsunterstützungsfunktion, BSF, bedient werden, umfassen.

5. Dienstentdeckungsverarbeitungsverfahren nach einem der Ansprüche 1 bis 4, wobei das Verfahren vor dem Senden der Dienstentdeckungsantwortnachricht an die Verbraucher-NF ferner Folgendes umfasst:
Bestimmen, ob eine aktuelle Netzlast größer als ein voreingestellter Schwellenwert ist; und
als Reaktion auf eine Situation, dass die aktuelle Netzlast größer als der voreingestellte Schwellenwert ist, Auslösen, die Dienstentdeckungsantwortnachricht an die Verbraucher-NF zu senden, wobei die Dienstentdeckungsantwortnachricht nur die ersten Informationen enthält.

6. Dienstentdeckungsverarbeitungsverfahren nach einem der Ansprüche 1 bis 4, wobei das Verfahren vor dem Senden der Dienstentdeckungsantwortnachricht an die Verbraucher-NF ferner Folgendes umfasst:
als Reaktion auf eine Situation, dass ein Informationsintegritätsparameter in der Dienstentdeckungsanforderungsnachricht ein Zielparameter ist, Auslösen, die Dienstentdeckungsantwortnachricht an die Verbraucher-NF zu senden, wobei die Dienstentdeckungsantwortnachricht nur die ersten Informationen enthält und der Informationsintegritätsparameter darstellt, ob die Verbraucher-NF integrale Registrierungsinformationen erfassen muss.

7. Dienstentdeckungsverarbeitungsverfahren nach Anspruch 1, wobei das Verfahren vor dem Empfangen der Dienstentdeckungsanforderungsnachricht von der Verbraucher-NF ferner Folgendes umfasst:
Empfangen der Registrierungsinformationen der Zielanbieter-NF; und
lokales Speichern der Registrierungsinformationen.

8. Dienstentdeckungsverarbeitungsverfahren nach Anspruch 7, wobei das lokale Speichern der Registrierungsinformationen Folgendes enthält:
Unterteilen der Registrierungsinformationen in die ersten Informationen und die zweiten Informationen und lokales Speichern der ersten Informationen und der zweiten Informationen.

9. Dienstentdeckungsverarbeitungsverfahren nach Anspruch 8, wobei die zweiten Informationen einen Teil oder alle Attributparameter der Zielanbieter-NF umfassen.

10. Netzvorrichtung, die Folgendes umfasst:
einen oder mehrere Prozessoren (801); und
einen Speicher (802) mit einem oder mehreren darauf gespeicherten Programmen, wobei das eine oder die mehreren Programme bei Ausführung durch den einen oder die mehreren Prozessoren bewirken, dass der eine oder die mehreren Prozessoren das Verfahren nach einem der Ansprüche 1 bis 9 implementieren.

11. Speichermedium mit einem darauf gespeicherten Computerprogramm, wobei das Computerprogramm bei Ausführung durch einen Prozessor das Verfahren nach einem der Ansprüche 1 bis 9 implementiert.

## Revendications

1. Procédé de traitement de découverte de service, comprenant :
la réception d'un message de demande de découverte de service provenant d'une fonction réseau consommatrice NF, le message de demande de découverte de service représentant une exigence de service de la fonction réseau consommatrice NF ;
la détermination d'une fonction NF fournisseur cible en fonction du message de demande de découverte de service ; et
l'envoi d'un message de réponse de découverte de service à la NF consommatrice, dans lequel le message de réponse de découverte de service comprend des premières informations sur la NF fournisseur cible, et les premières informations comprennent au moins des paramètres de base de la NF fournisseur cible, les paramètres de base comprennent des informations d'adresse protocole Internet, IP, et des informations de numéro de port, et les premières informations sont plus petites que les informations d'enregistrement de la NF fournisseur cible, dans lequel les premières informations sont obtenues en adaptant les informations d'enregistrement de la NF fournisseur cible.

2. Procédé de traitement de découverte de service selon la revendication 1, dans lequel, après l'envoi du message de réponse de découverte de service au NF consommateur, le procédé comprend en outre :
la réception d'une demande d'acquisition d'informations envoyée par le consommateur NF ; et
en réponse à la demande d'acquisition d'informations, l'envoi de deuxièmes informations au consommateur NF, les deuxièmes informations comprenant une partie ou la totalité des paramètres d'attributs du fournisseur NF cible.

3. Procédé de traitement de découverte de service selon la revendication 1 ou 2, dans lequel les premières informations comprennent des paramètres de référence, et les paramètres de référence comprennent au moins l'une parmi des informations de type de protocole, des informations de charge et des informations de capacité.

4. Procédé de traitement de découverte de service selon la revendication 2, dans lequel les paramètres d'attribut comprennent au moins l'une parmi des informations d'identité de zone de suivi, TAI, des informations d'identité permanente d'abonnement, SUPI, des informations d'identité d'abonnement public général, GPSI, et des informations de version de protocole réseau fournies par une fonction de support de liaison, BSF.

5. Procédé de traitement de découverte de service selon l'une quelconque des revendications 1 à 4, dans lequel, avant l'envoi du message de réponse de découverte de service au NF consommateur, le procédé comprend en outre :
la détermination si une charge réseau actuelle est supérieure à un seuil prédéfini ; et
en réponse à une situation où la charge réseau actuelle est supérieure au seuil prédéfini, déclencher l'envoi du message de réponse de découverte de service au NF consommateur, dans lequel le message de réponse de découverte de service ne comprend que la première information.

6. Procédé de traitement de découverte de service selon l'une quelconque des revendications 1 à 4, dans lequel, avant l'envoi du message de réponse de découverte de service au NF consommateur, le procédé comprend en outre :
en réponse à une situation dans laquelle un paramètre d'intégrité des informations dans le message de demande de découverte de service est un paramètre cible, le déclenchement de l'envoi du message de réponse de découverte de service au NF consommateur, dans lequel le message de réponse de découverte de service ne comprend que la première information, et le paramètre d'intégrité des informations représente si le NF consommateur doit acquérir des informations d'enregistrement intégrales.

7. Procédé de traitement de découverte de service selon la revendication 1, dans lequel, avant de recevoir le message de demande de découverte de service provenant du NF consommateur, le procédé comprend en outre :
la réception des informations d'enregistrement du fournisseur NF cible ; et
le stockage des informations d'enregistrement localement.

8. Procédé de traitement de découverte de service selon la revendication 7, dans lequel le stockage local des informations d'enregistrement comprend :
la division des informations d'enregistrement en premières informations et secondes informations, et le stockage des premières informations et des secondes informations localement.

9. Procédé de traitement de découverte de service selon la revendication 8, dans lequel les deuxièmes informations comprennent une partie ou la totalité des paramètres d'attributs du fournisseur NF cible.

10. Dispositif réseau, comprenant :
un ou plusieurs processeurs (801) ; et
une mémoire (802) sur laquelle sont stockés un ou plusieurs programmes, dans lequel le ou les programmes, lorsqu'ils sont exécutés par le ou les processeurs, amènent le ou les processeurs à mettre en oeuvre le procédé selon l'une quelconque des revendications 1 à 9.

11. Support de stockage sur lequel est enregistré un programme informatique, dans lequel le programme informatique, lorsqu'il est exécuté par un processeur, met en œuvre le procédé selon l'une quelconque des revendications 1 à 9.
